# EUROPEAN PATENT APPLICATION

(11) **EP 4 440 012 A1**
(43) Date of publication of application: **02.10.2024**
(21) Application number: 22913668.4
(22) Date of filing: 17.10.2022
(51) Int. Cl.: H04J 3/06

(54) **PRECISION INFORMATION SENDING METHOD, DEVICE, AND SYSTEM**

(30) Priority: 30.12.2021 CN 202111646943
(71) Applicant: Huawei Technologies Co., Ltd., Shenzhen, Guangdong 518129 (CN)
(72) Inventor: GU, Yang, Shenzhen, Guangdong 518129 (CN)
(74) Representative: MERH-IP Matias Erny Reichl Hoffmann Patentanwälte PartG mbB
(86) International application number: PCT/CN2022/125663
(87) International publication number: WO 2023/124404

(57) **Abstract**

Embodiments of this application provide a method for sending accuracy information, an apparatus, and a system. The method includes: A first network element switches from a locked state to a holdover state; and the first network element sends state information to a second network element, where the state information includes accuracy information of the first network element in the holdover state. According to the foregoing method, the second network element may obtain state information of the first network element in the holdover state, and perform clock synchronization with the first network element or the second network element based on the state information, to finally implement more accurate clock synchronization and further improve performance of a clock synchronization system.

## Description

This application claims priority to Chinese Patent Application No. 202111646943.8, filed with the China National Intellectual Property Administration on December 30, 2021 and entitled "METHOD FOR SENDING ACCURACY INFORMATION, APPARATUS, AND SYSTEM", which is incorporated herein by reference in its entirety.

### TECHNICAL FIELD

This application relates to the communication field, and in particular, to a method for sending accuracy information, an apparatus, and a system.

### BACKGROUND

Clock synchronization is a basic function in a communication system. Generally, a clock synchronization system that depends on network timing includes a time reference module, a primary station (grandmaster), and a secondary station (slave). The primary station and the secondary station each may be a logical unit, and a specific form of the logical unit is not fixed. In a case in which an error is not considered, the primary station obtains clock information from the time reference module and sends the information for clock synchronization to the secondary station. When the time reference module is faulty and cannot provide correct clock information for the primary station, the primary station switches from a locked state to a holdover state. The locked state is a state of the primary station when the time reference module runs normally, and the holdover state is a state of the primary station when the time reference module is faulty. The holdover state may also be understood as a state in which the primary station autonomously generates clock information. The information that is for clock synchronization and that is obtained by the secondary station from the primary station is no longer accurate. Consequently, quality of service of the communication system is affected.

### SUMMARY

This application describes a method for sending accuracy information, an apparatus, and a system.

According to a first aspect, an embodiment of this application provides a method for sending accuracy information. The method is performed by a first network element. The method includes: The first network element switches from a locked state to a holdover state; and the first network element sends state information to a second network element, where the state information includes accuracy information of the first network element in the holdover state. According to the foregoing solution, the first network element notifies the second network element of the accuracy information of the first network element in the holdover state, so that the second network element can implement more accurate clock synchronization based on the accuracy information.

For example, the first network element may be a primary station in a clock synchronization system, and the second network element may be a secondary station in the clock synchronization system. In a possible implementation, the first network element may be a network element having a clock synchronization function in a core network, and the second network element may be any access network. In a possible implementation, the first network element may be a baseband unit in an access network, and the second network element may be a radio frequency unit in the access network. The descriptions are applicable to descriptions of another aspect of this application. Details are not described again.

In a possible implementation, when the time reference module is faulty, the first network element switches from the locked state to the holdover state.

In a possible implementation, the accuracy information includes real-time phase accuracy peak information of the first network element. The real-time phase accuracy peak information of the first network element indicates maximum real-time phase accuracy of the first network element in the holdover state. A real-time phase accuracy peak value of the first network element may also be referred to as real-time accuracy peak information of the first network element. It should be understood that the real-time accuracy peak information of the first network element may further indicate maximum real-time accuracy of the first network element in the holdover state. The descriptions are applicable to descriptions of another aspect of this application. Details are not described again.

In a possible implementation, the accuracy information includes frequency accuracy information. The frequency accuracy information indicates a frequency deviation ratio of the first network element in the holdover state.

In a possible implementation, the state information further includes holdover capability information of the first network element.

In a possible case, the holdover capability information includes real-time accuracy or step accuracy value.

In another possible case, the holdover capability information includes duration in which the first network element works within a first error range. A first error may be an agreed error value, a default error value, or an error value set in the first network element. The first error may alternatively be a value of an error variation range from an error upon which the first network element starts to switch to the holdover state to an error upon which the first network element can support only a last service, in other words, a maximum error range that the first network element in the holdover state can support. The descriptions are applicable to descriptions of another aspect of this application. Details are not described again.

In a possible implementation, the state information further includes holdover duration information of the first network element. The holdover duration information indicates duration in which the first network element works within a second error range, and the second error range is related to a service. In other words, a second error is an error allowed for a specific type of service, and errors allowed for different services may be different. The descriptions are applicable to descriptions of another aspect of this application. Details are not described again.

In a possible implementation, the state information further includes clock reference source type information. The clock reference source type information includes a parameter of a clock reference source adapted to the first network element. The clock reference source may be a satellite receiver adapted to the first network element.

In a possible case, the clock reference source type information includes one or more of the following: a mode of the satellite receiver adapted to the first network element, or a frequency band of the satellite receiver adapted to the first network element.

In a possible implementation, the state information further includes local source type information. The local source type information indicates a type of a local oscillator of the first network element.

In a possible implementation, that the first network element sends state information to a second network element includes: The first network element broadcasts the state information to the second network element.

In a possible implementation, the method further includes: The first network element receives a request message from the second network element, where the request message is for requesting to obtain the state information from the first network element. In other words, the second network element requests to obtain the state information of the first network element in the holdover state. In this case, the first network element sends the state information to the second network element when the first network element switches from the locked state to the holdover state. The descriptions are applicable to descriptions of another aspect of this application. Details are not described again.

According to a second aspect, an embodiment of this application provides a method for sending accuracy information. The method is performed by a second network element. The method includes: The second network element receives state information from a first network element, where the state information includes accuracy information of the first network element in a holdover state; and the second network element performs clock synchronization with the first network element or the second network element based on the accuracy information. According to the method, when the first network element is in the holdover state, the second network element implements more accurate clock synchronization based on the obtained accuracy information.

For example, that the second network element performs clock synchronization with the first network element or the second network element should be understood as that the second network element may implement clock synchronization via the first network element, or may implement clock synchronization depending on the second network element. In other words, the second network element may choose to use the first network element to perform clock synchronization, or may choose to use the second network element to perform clock synchronization. For different implementations of this aspect, refer to the descriptions. Details are not described again.

In a possible implementation, the accuracy information includes real-time phase accuracy peak information of the first network element. The real-time phase accuracy peak information of the first network element indicates maximum real-time phase accuracy of the first network element in the holdover state. In a possible implementation manner of the implementation, the method further includes: The second network element stops using first information, where the first information is accuracy information of the first network element in a locked state.

In a possible implementation, the accuracy information includes frequency accuracy information. The frequency accuracy information indicates a frequency deviation ratio of the first network element in the holdover state. The implementation further includes: The second network element adjusts a clock based on the frequency accuracy information.

In a possible implementation, the state information further includes holdover capability information of the first network element. In a possible case, the holdover capability information includes real-time accuracy or step accuracy of the first network element. In another possible case, the holdover capability information includes duration in which the first network element works within a first error range. In a possible implementation manner of the implementation, the second network element performs clock synchronization with the first network element or the second network element based on the holdover capability information and the accuracy information.

In a possible implementation, the state information further includes holdover duration information of the first network element. The holdover duration information indicates duration in which the first network element works within a second error range, and the second error range is related to a service. In a possible implementation manner of the implementation, the second network element performs clock synchronization with the first network element or the second network element based on the holdover duration information and the accuracy information.

In a possible implementation, the state information further includes clock reference source type information. The clock reference source type information includes a parameter of a clock reference source adapted to the first network element. The clock reference source type information includes one or more of the following: a mode of a satellite receiver adapted to the first network element, or a frequency band of a satellite receiver adapted to the first network element. In a possible implementation manner of the implementation, the second network element performs clock synchronization with the first network element or the second network element based on the clock reference source type information and the accuracy information.

In a possible implementation, the state information further includes local source type information. The local source type information indicates a type of a local oscillator of the first network element. In a possible implementation manner of the implementation, the second network element performs clock synchronization with the first network element or the second network element based on the local source type information and the accuracy information.

In a possible implementation, that the second network element receives state information from a first network element includes: The second network element receives the broadcast state information from the first network element.

In a possible implementation, the method further includes: The second network element sends a request message to the first network element, where the request message is for requesting to receive the state information from the first network element. For the implementation, refer to the descriptions of the first aspect.

According to a third aspect, an embodiment of this application provides a method for sending accuracy information. The method is performed by a first network element and a second network element. The method includes: The first network element switches from a locked state to a holdover state; the first network element sends state information to the second network element, where the state information includes accuracy information of the first network element in the holdover state; the second network element receives the state information from the first network element; and the second network element performs clock synchronization with the first network element or the second network element based on the accuracy information. According to the method, when the first network element is in the holdover state, the second network element implements more accurate clock synchronization based on the obtained accuracy information.

That the second network element performs clock synchronization with the second network element based on the accuracy information should be understood as that the second network element no longer uses another network element to perform clock synchronization, but uses a clock source of the second network element to perform clock synchronization. In other words, the second network element uses the clock source of the second network element to obtain time information, and use the time information for a service of the second network element. The foregoing descriptions are also applicable to descriptions of another aspect.

In a possible implementation, the accuracy information includes real-time phase accuracy peak information of the first network element. The real-time phase accuracy peak information of the first network element indicates maximum real-time phase accuracy of the first network element in the holdover state. In a possible implementation manner of the implementation, the method further includes: The second network element stops using first information, where the first information is accuracy information of the first network element in the locked state.

In a possible implementation, the accuracy information includes frequency accuracy information. The frequency accuracy information indicates a frequency deviation ratio of the first network element in the holdover state. The implementation further includes: The second network element adjusts a clock based on the frequency accuracy information.

In a possible implementation, the state information further includes holdover capability information of the first network element. In a possible case, the holdover capability information includes real-time accuracy or step accuracy of the first network element. In another possible case, the holdover capability information includes duration in which the first network element works within a first error range. In a possible implementation manner of the implementation, the second network element performs clock synchronization with the first network element or the second network element based on the holdover capability information and the accuracy information.

In a possible implementation, the state information further includes holdover duration information of the first network element. The holdover duration information indicates duration in which the first network element works within a second error range, and the second error range is related to a service. In a possible implementation manner of the implementation, the second network element performs clock synchronization with the first network element or the second network element based on the holdover duration information and the accuracy information.

In a possible implementation, the state information further includes clock reference source type information. The clock reference source type information includes a parameter of a clock reference source adapted to the first network element. The clock reference source type information includes one or more of the following: a mode of a satellite receiver adapted to the first network element, or a frequency band of a satellite receiver adapted to the first network element. In a possible implementation manner of the implementation, the second network element performs clock synchronization with the first network element or the second network element based on the clock reference source type information and the accuracy information.

In a possible implementation, the state information further includes local source type information. The local source type information indicates a type of a local oscillator of the first network element. In a possible implementation manner of the implementation, the second network element performs clock synchronization with the first network element or the second network element based on the local source type information and the accuracy information.

In a possible implementation, that the second network element receives the state information from the first network element includes: The second network element receives the broadcast state information from the first network element.

In a possible implementation, the method further includes: The second network element sends a request message to the first network element. The request message is for requesting to receive the state information from the first network element. For the implementation, refer to the descriptions of the first aspect.

According to a fourth aspect, an embodiment of this application provides a method for sending accuracy information. The method is performed by a first network element. The method includes: The first network element sends frequency accuracy information to a second network element, where the frequency accuracy information includes accuracy information of the first network element in a locked state. According to the foregoing solution, the first network element notifies the second network element of the frequency accuracy information of the first network element in the locked state, so that the second network element can implement more accurate clock synchronization based on the frequency accuracy information.

For a possible implementation of this aspect, refer to the descriptions of the first aspect. Details are not described again.

According to a fifth aspect, an embodiment of this application provides a method for sending accuracy information. The method is performed by a second network element. The method includes: The second network element receives frequency accuracy information from a first network element, where the frequency accuracy information includes accuracy information of the first network element in a locked state; and the second network element performs clock synchronization with the first network element or the second network element based on the frequency accuracy information. According to the method, when the first network element is in a holdover state, the second network element implements more accurate clock synchronization based on the obtained frequency accuracy information.

For a possible implementation of this aspect, refer to the descriptions of the second aspect. Details are not described again.

According to a sixth aspect, an embodiment of this application provides a communication apparatus, including a processor. The processor is configured to read a program from a memory and run the program, to implement the method according to any one of the first aspect or the possible implementations of the first aspect, the method according to any one of the second aspect or the possible implementations of the second aspect, the method according to any one of the fourth aspect or the possible implementations of the fourth aspect, or the method according to any one of the fifth aspect or the possible implementations of the fifth aspect.

According to a seventh aspect, an embodiment of this application provides a communication system, including a first network element and a second network element. The first network element may perform the method according to any one of the first aspect or the possible implementations of the first aspect, and the second network element may perform the method according to any one of the second aspect or the possible implementations of the second aspect. Alternatively, the first network element may perform the method according to any one of the fourth aspect or the possible implementations of the fourth aspect, and the second network element may perform the method according to any one of the fifth aspect or the possible implementations of the fifth aspect.

According to an eighth aspect, an embodiment of this application provides a computer program product including instructions. When the instructions are run on a computer, the computer is enabled to perform the method according to any one of the first aspect or the possible implementations of the first aspect, the method according to any one of the second aspect or the possible implementations of the second aspect, the method according to any one of the third aspect or the possible implementations of the third aspect, the method according to any one of the fourth aspect or the possible implementations of the fourth aspect, or the method according to any one of the fifth aspect or the possible implementations of the fifth aspect.

According to a ninth aspect, an embodiment of this application provides a computer-readable storage medium. The computer-readable storage medium stores instructions. When the instructions are run on a computer, a processor is enabled to perform the method according to any one of the first aspect or the possible implementations of the first aspect, the method according to any one of the second aspect or the possible implementations of the second aspect, the method according to any one of the third aspect or the possible implementations of the third aspect, the method according to any one of the fourth aspect or the possible implementations of the fourth aspect, or the method according to any one of the fifth aspect or the possible implementations of the fifth aspect.

### BRIEF DESCRIPTION OF DRAWINGS

FIG. 1 is a schematic diagram of a network architecture of a communication system to which this application is applicable;
FIG. 2 is a schematic diagram of an architecture in which clock synchronization is applied to a communication system to which this application is applicable;
FIG. 3 is a schematic diagram of another architecture in which clock synchronization is applied to a communication system to which this application is applicable;
FIG. 4 is a schematic diagram of a method for sending accuracy information according to an embodiment of this application;
FIG. 5 is a schematic diagram of another method for sending accuracy information according to an embodiment of this application;
FIG. 6 is a schematic diagram of still another method for sending accuracy information according to an embodiment of this application;
FIG. 7 is a schematic diagram of a communication apparatus according to an embodiment of this application; and
FIG. 8 is a schematic diagram of another communication apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings. The technical solutions in embodiments of this application may be applied to various communication systems, for example, a long term evolution (long term evolution, LTE) system, an LTE frequency division duplex (frequency division duplex, FDD) system, and an LTE time division duplex (time division duplex, TDD) system, a fifth generation (5th generation, 5G) mobile communication system or a new radio (new radio, NR) system, or may be applied to a future communication system or another similar communication system. A network architecture and a service scenario described in this application are intended to describe the technical solutions in this application more clearly, but do not constitute a limitation on the technical solutions provided in this application. A person of ordinary skill in the art may know that, with evolution of the network architecture and emergence of a new service scenario, the technical solutions provided in this application are also applicable to similar technical problems.

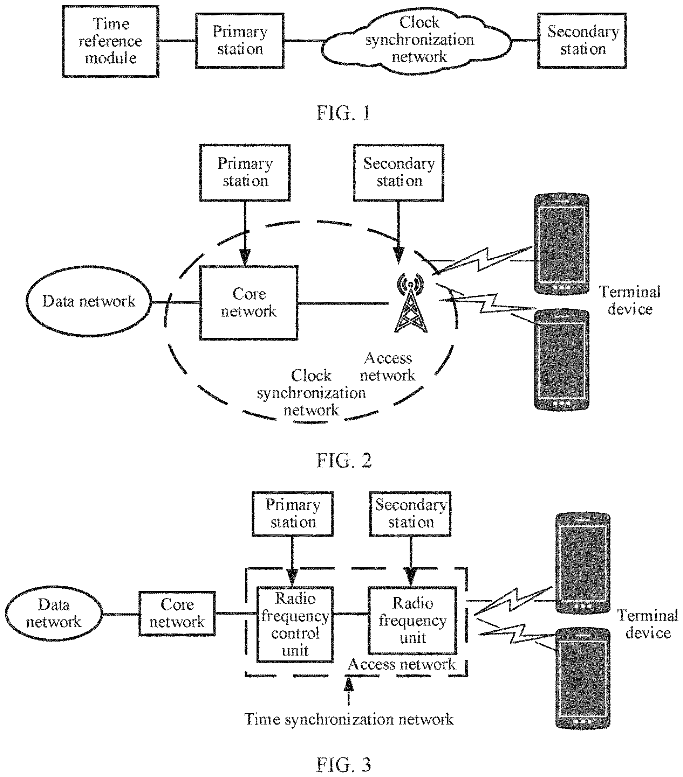

FIG. 1 is a diagram of an architecture of clock synchronization network to which this application is applicable. The network shows a time reference module, a primary station, a clock synchronization network, and a secondary station.

The time reference module may be a module that provides standard time, and may have a plurality of product forms. For example, the time reference module may be a satellite receiver, or may be another apparatus that is configured to convert time information received from a satellite receiver into standard time. The standard time may be coordinated universal time (Coordinated Universal Time, UTC) or other standard time similar to UTC. For example, if the time reference module is a satellite receiver, the satellite receiver may support but is not limited to at least one of the following systems: a Beidou navigation satellite system (BeiDou Navigation Satellite System, BDS), a global positioning system (Global Positioning System, GPS) of the United States, a global navigation satellite system (Global Navigation Satellite System, GLONASS) of Russia, a Galileo navigation satellite system (Galileo Navigation Satellite System, GALILEO) of the European union, and a quasi-zenith satellite system (Quasi-Zenith Satellite System, QZSS). Different receivers can support different frequencies. For example, the GPS and the QZSS can support a frequency band L1CA (1575.42 MHz), a frequency band L1C (1575.42 MHz), a frequency band L2 (1227.6 MHz), a frequency band L5 (1176.45 MHz), and the like. The BDS can support a frequency band B1I (1501.698 MHz), a frequency band B1C (1575.42 MHz), a frequency band B2a (1176.45 MHz), a frequency band B3I (1268.52 MHz), and the like. The GALILEO can support a frequency band E1 (1575.42 MHz), a frequency band E5a (1176.45 MHz), a frequency band E5b (1207.14 MHz), and a frequency band E6 (1278.75 MHz). The GLONASS can support a frequency band G1 (1602.00 MHz), a frequency band G2 (1246.00 MHz), and the like. The time reference module may be deployed in an access network device. Specifically, the time reference module may be deployed on a radio frequency control unit module side of the access network device, or may be deployed on a radio frequency module side of the access network device. The time reference module may alternatively be deployed in a core network. This is not limited in this application.

The primary station (Grand Master, GM), also referred to as a global primary clock device, is a device that obtains reference time from the time reference module. The reference time may be standard time. The primary station may be a reference primary clock device, or may be an enhanced reference primary clock device. The primary station has a local clock source, and the local clock source may be a crystal clock or an atomic clock. For example, the crystal clock may be a crystal source whose model is OCXO 2/3E, or may be an atomic clock such as a rubidium clock, a cesium clock, or the like. The primary station may support at least one mode of the time reference module, for example, the different modes of the satellite receiver, or may work in at least one frequency band type described above. It may be understood that the primary station may further support more modes of the time reference module or even a plurality of frequency band types, and performance of the primary station is better. The primary station may be a module or a network element apparatus that is for a clock service and that is in the core network, or may be a module or an apparatus that is for a clock service and that is in an access network device side. Specifically, a radio frequency control unit module of the access network device may be considered as the primary station, or a radio frequency module of the access network device may be considered as the primary station. This is not limited in this application.

The secondary station (slave) may also be referred to as a secondary clock device, and a function of the secondary station is to obtain time information from the primary station. For example, the time information is standard time. For example, the secondary station may be located on an access network side. Specifically, any access network device in the access network may be considered as the secondary station, any radio frequency control unit module in the access network device may be considered as the secondary station, any radio frequency module in the access network device may be considered as the secondary station, or another device or apparatus that needs to use time information may be considered as the secondary station.

It should be understood that the primary station and the secondary station should be different network elements or apparatuses. For example, when the primary station is the radio frequency control unit module of the access network device, the secondary station is the radio frequency module of the access network device. When the primary station is the radio frequency module of the access network device, the secondary station is the radio frequency control unit module.

A clock synchronization network is for transmitting clock synchronization information. For example, the clock synchronization network may be a backhaul network, may be a fronthaul network, or may be another network. A final objective of the clock synchronization network is to perform clock synchronization between the primary station and the secondary station.

For example, for deployment of the primary station and the secondary station, refer to descriptions in FIG. 2 and FIG. 3. FIG. 2 is a schematic diagram of a communication system in which a clock synchronization network is deployed. The communication system includes a data network, a core network, an access network, and terminal devices. For a specific function and a definition of each component in the communication system, refer to descriptions in the 3rd generation partnership project. Details are not described in this application. As shown in FIG. 2, a primary station is deployed in a core network. Specifically, a module or network element used for a clock service may be considered as the primary station, and an apparatus or a module on an access network side may be considered as a secondary station. In this case, the clock synchronization network is a backhaul network between the core network and the access network.

FIG. 3 is a schematic diagram of another communication system in which a clock synchronization network is deployed. Because an access network includes a radio frequency control unit and a radio frequency unit, if a primary station and a secondary station are respectively deployed on a radio frequency control unit module side and a radio frequency unit module side of an access network device, as shown in FIG. 3, the radio frequency control unit is considered as the primary station, and the radio frequency unit is considered as the secondary station. In this case, the clock synchronization network is a fronthaul network between the radio frequency control unit and the radio frequency unit.

It should be understood that locations of the primary station and the secondary station may be exchanged. Even in addition to the foregoing manners of deploying the secondary station and the primary station, there may be another similar deployment manner. This is not limited in this application.

During actual deployment, the primary station and the time reference module may be jointly deployed or may be separately deployed. Deployment forms of the primary station and the time reference module are not limited in this application. In addition, it should be understood that the radio frequency control unit may be understood as having a function of the primary station. In other words, the radio frequency control unit may be considered as the primary station. Similarly, the radio frequency unit has a function of the secondary station. In other words, the radio frequency unit may be considered as the secondary station. The primary station and the secondary station in the foregoing clock synchronization system are logical functional units. To be specific, the primary station and the secondary station may be implemented by specified hardware, may be implemented by a software instance on specified hardware, or may be implemented by a virtual function instantiated on an appropriate platform. Each apparatus or module may be combined or separately disposed. This is not limited in this application.

It should be further understood that the radio frequency control unit may also be referred to as a wireless control unit, a wireless device control unit, or the like. The radio frequency unit may also be referred to as a wireless unit, a wireless device, or the like. This is not limited in this application.

There are a plurality of protocols that may be selected for using synchronization in an existing network. For example, in a communication network, an accuracy clock synchronization protocol standard of a network measurement and control system, namely, the institute of electrical and electronics engineers (Institute of Electrical and Electronics Engineers, IEEE) 1588 protocol, may be used for implementing clock synchronization of the communication network.

The primary station may be in different states during working, for example, a locked state, a holdover state, and a free running state. If the primary station is in the locked state, it means that the primary station can obtain time information from the time reference module. In other words, when the time reference module is in a normal working state, the primary station is in the locked state. This means that the secondary station can obtain the accurate time information from the primary station and normally complete clock synchronization. However, when the primary station is in the holdover state, in a possible case, the time reference module is faulty, or the time reference module cannot communicate with the primary station. In this case, the primary station cannot obtain accurate time information from the time reference module, and can only perform timing depending on a clock module of the primary station. In this case, performance of the primary station decreases continuously over time, and the time information provided by the primary station for the secondary station is also continuously deviated. When the primary station enters the free running state, the time reference module is faulty for a long time. In this case, the primary station performs clock synchronization depending on a free running state of a local clock source. Currently, when the primary station is in the holdover state, the secondary station cannot sense that the primary station is in the holdover state. In addition, time information obtained by the secondary station from the primary station is time information of the primary station in the locked state. Consequently, the secondary station uses incorrect time information to perform clock synchronization. In addition, if a time period in which the time reference module is faulty exceeds a specific threshold, clock synchronization of the primary station is switched from synchronization in a time dimension to synchronization in a frequency dimension. An access network device in which the secondary station is deployed may stop clock synchronization because the access network device does not support synchronization in the frequency dimension. In this case, if the access network device still has a service that uses clock synchronization in the time dimension, the method reduces quality of service, and reduces service duration of the access network device.

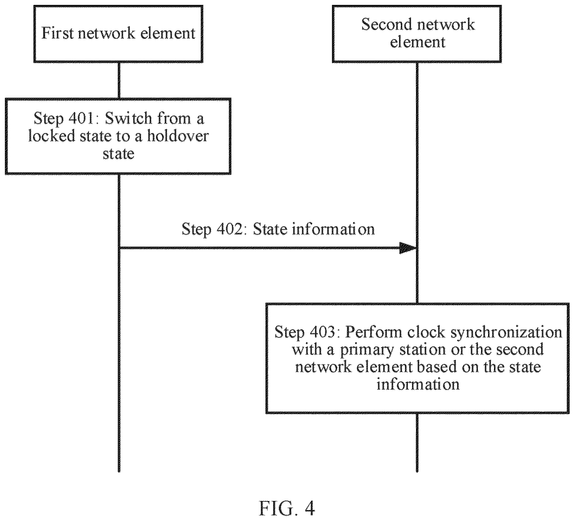

This application provides a clock synchronization method, to resolve the foregoing problems. As shown in FIG. 4, the method may be performed by a first network element and a second network element. The first network element in the figure may be the primary station in FIG. 1, FIG. 2, or FIG. 3, and the second network element in the figure may be the secondary station in FIG. 1, FIG. 2, or FIG. 3. The method may include the following steps.

Step 401: The first network element switches from a locked state to a holdover state.

In a possible implementation, the first network element receives satellite time information and/or a pulse signal of a time reference module from the time reference module, and the first network element determines, based on the satellite time information and/or the pulse signal of the time reference module, that the current time reference module is faulty. Therefore, the first network element switches from the locked state to the holdover state. It should be understood that the first network element may detect, by using another method, that the time reference module is faulty. This is not limited in this application.

Step 402: The first network element sends state information to the second network element.

Correspondingly, the second network element receives the state information from the first network element.

For example, the first network element generates the state information, and sends the state information to the second network element.

The state information includes accuracy information of the first network element in the holdover state.

In a possible implementation, the first network element broadcasts the state information to the second network element. In another possible implementation, the first network element receives a request message from the second network element. The request message is for requesting the first network element to send the state information. Therefore, the first network element sends the state information to the second network element.

Step 403: The second network element performs clock synchronization with the first network element or the second network element based on the accuracy information.

Further, the second network element may stop using first information. The first information is accuracy information of the first network element in the locked state.

For example, the accuracy information may include real-time phase accuracy peak information of the first network element. The real-time phase accuracy peak information of the first network element indicates a state of maximum real-time phase accuracy of the first network element in the holdover state. A real-time phase accuracy peak value of the first network element may also be referred to as real-time accuracy peak information of the first network element. It should be understood that the real-time accuracy peak information of the first network element may further indicate maximum real-time accuracy of the first network element in the holdover state. The real-time phase accuracy peak information of the first network element is for time domain clock synchronization. In this case, the second network element determines that the first network element is currently in the holdover state, and the secondary station may stop using the information of the primary station in the locked state, and perform time domain clock synchronization by using the real-time phase accuracy peak information of the first network element, or perform time domain clock synchronization with the second network element.

Alternatively, the accuracy information may include frequency accuracy information. The frequency accuracy information indicates a frequency deviation ratio of the first network element, to be specific, a deviation ratio between a time frequency value generated by the first network element by using the time reference module and a standard frequency value of satellite time. The second network element performs frequency domain clock synchronization with the first network element or the second network element based on the accuracy information.

The state information may further include holdover capability information. The holdover capability information indicates a holdover capability of the first network element, and the capability information may be understood as a holdover capability of the first network element at a specific accuracy value.

For example, the holdover capability information may be real-time accuracy or step accuracy of a clock of the first network element, duration in which the first network element works within a specific error range (for example, a phase error range of 1 µs), or a combination of the foregoing two cases.

In a possible implementation, the holdover capability information includes real-time accuracy or step accuracy. In another possible implementation, the holdover capability information may include duration in which the first network element works within a first error range. A first error may be an agreed error value, a default error value, or an error value set in the first network element. The first error may alternatively be a value of an error variation range from an error upon which the first network element starts to switch to the holdover state to an error upon which the first network element can support only a last service, in other words, a maximum error range that the first network element in the holdover state can support.

The second network element performs clock synchronization with the first network element or the second network element based on the holdover capability information and the accuracy information. The holdover capability information is the real-time accuracy or the step accuracy of the clock of the first network element. Specifically, the second network element selects, based on the real-time accuracy or the step accuracy, a network element having a better holdover capability between the first network element or the second network element, and performs clock synchronization with the network element. This helps improve a clock synchronization effect.

In addition, in a possible case, the second network element may further determine the holdover capability of the first network element based on the holdover capability information, so that the second network element may adjust service deployment based on the holdover capability information. Specifically, if the holdover capability information is the real-time accuracy or the step accuracy of the clock of the first network element, the second network element determines an accuracy status of the second network element at a current moment based on the real-time accuracy or the step accuracy, and adjusts a service type based on the accuracy status of the second network element at the current moment. For example, if the current accuracy is a first value, and the first value meets a high bandwidth service in existing services of the second network element, the second network element continues to use the clock of the first network element as a clock of the high bandwidth service. In other words, the second network element implements clock synchronization via the current first network element. The high bandwidth service is a service whose occupied bandwidth exceeds a bandwidth threshold. The bandwidth threshold may be adjusted based on specific implementation. This is not limited in this application. If the current accuracy is a second value, the second value can only meet a voice service, and the second network element has a high bandwidth service, the second network element may choose to migrate the high bandwidth service to another second network element. Alternatively, the second network element may choose to stop using the first network element to perform clock synchronization. Specifically, the second network element may choose to perform clock synchronization with the second network element. In this case, according to the method, quality of service may not decrease with decreased clock synchronization accuracy. Therefore, quality of service of a communication system is improved.

The state information may further include holdover duration information. The holdover duration information indicates duration in which the first network element works within a second error range, and the second error range is related to the service. In other words, a second error is an error allowed for a specific type of service, and errors allowed for different services may be different. It may be understood that a value of the second error is less than a value of the first error. In other words, holdover duration allowed for different services is within the maximum error range that the first network element in the holdover state can support. For example, the holdover duration information is 24 hours. In this case, when time exceeds 24 hours, the primary station switches from the holdover state to a free running state, or switches to another state. The second network element performs clock synchronization with the first network element or the second network element based on the holdover duration information and the accuracy information. In a possible case, the second network element may determine duration that can be maintained by the first network element in the holdover state, and the second network element may migrate between first network elements in the holdover duration, so that the second network element coordinates, in the holdover duration, another communication resource for a service supported by the current second network element, for example, migrates the service, or migrates to a new first network element in the holdover duration, to ensure accuracy of a clock used by the service. In addition, the second network element selects a network element that can be adapted to more modes or frequency bands of the satellite receiver. Therefore, a network element having better quality is provided for clock synchronization, and the clock synchronization effect is finally improved. The second network element may select, based on different service requirements and the holdover duration information, a network element having longer holdover duration, to perform clock synchronization. This helps improve the clock synchronization effect.

The state information may further include clock reference source type information. The clock reference source type information includes a parameter of a clock reference source adapted to the first network element.

In a possible implementation, the clock reference source type information includes one or more of the following: a mode of a satellite receiver adapted to the first network element, or a frequency band of a satellite receiver adapted to the first network element. For example, the clock reference source type information may include the mode of the satellite receiver adapted to the first network element. The mode of the satellite receiver adapted to the first network element is one or more of a GPS, a BDS, a GALILEO, a GLONASS, and a QZSS. For another example, the clock reference source type information may include the frequency band of the satellite receiver adapted to the first network element. The frequency band of the satellite receiver adapted to the first network element is one or more of L1CA, B1I, B1C, G2, and L5. The clock reference source type information may alternatively be another performance parameter of the first network element. This is not listed one by one in this application. It should be understood that the clock reference source type information may be one or more of the foregoing descriptions. For example, the clock reference source type information may be the mode of the satellite receiver adapted to the first network element, may be the frequency band of the satellite receiver adapted to the first network element, or may include the mode of the satellite receiver adapted to the first network element and the frequency band of the satellite receiver adapted to the first network element.

The second network element may perform clock synchronization with the first network element or the second network element based on the clock reference source type information and the accuracy information. The second network element may determine, based on the clock reference source type information, performance of the time reference module used by the current first network element, to determine whether to migrate between first network elements. It may be understood that, if the clock reference source type information includes both the mode of the satellite receiver adapted to the first network element and the frequency band of the satellite receiver adapted to the first network element, the second network element may consider, with reference to the mode of the satellite receiver adapted to the first network element and the frequency band of the satellite receiver adapted to the first network element, whether to migrate between first network elements.

The state information may further include a local source type information. The local source type information indicates a type of a local oscillator of the first network element, for example, an atomic clock or a crystal source. For example, the local source type is an OCXO 2/3E crystal oscillator, an atomic clock of a rubidium clock type, or an atomic clock of a cesium clock type. It may be understood that different types of local sources have different stability and different accuracy.

The second network element performs clock synchronization with the first network element or the second network element based on the local source type information and the accuracy information. The second network element may determine, based on the local source type, performance of the local source of the current first network element, to determine whether to migrate to a network element having a local source with better performance based on a requirement of a current access network device, for example, whether to use a local source of the second network element to perform clock synchronization. For example, if the current local source type of the first network element is the crystal source, and the local source used by the second network element is the atomic clock, the second network element determines to use the local source of the second network element to implement clock synchronization. The atomic clock is superior to the crystal source in terms of stability and accuracy. Therefore, if the second network element uses a network element whose local source type is the atomic clock, performance of subsequent clock synchronization can be ensured, and duration and accuracy of clock synchronization are further ensured. Finally, the clock synchronization effect is ensured.

The method shown in FIG. 4 is also applicable to a scenario in which a plurality of network elements send respective state information of the plurality of network elements to the second network element. The second network element selects, based on the state information of the plurality of network elements, the first network element and performs clock synchronization with the first network element, or selects the second network element and performs clock synchronization with the second network element. The first network element is one of the plurality of network elements, and the plurality of network elements are network elements whose functions are consistent with functions of the first network element. When the second network element selects the first network element and performs clock synchronization with the first network element, it should be understood as that the second network element selects the first network element from the plurality of network elements based on the state information.

That the state information includes the clock reference source type information is used as an example, for a scenario in which the plurality of network elements all send respective state information of the plurality of network elements to the second network element, the second network element compares the plurality of network elements based on the clock reference source type information, and selects the first network element that is adapted to most modes of the satellite receiver, and/or the first network element that is adapted to most types of frequency bands of the satellite receiver, and performs clock synchronization with the first network element. For example, in the plurality of network elements, if a mode of a satellite receiver of another network element other than the first network element is only adapted to the GPS, the second network element may select and use a first network element that supports the GPS, the BDS, the GALILEO, the GLONASS, and the QZSS. For another example, in the plurality of network elements, if a frequency band of a satellite receiver of another network element other than the first network element is only adapted to L5, and the second network element may select a first network element that supports L1CA, B1I, B1C, G2, and L5, and performs clock synchronization with the first network element. Finally, the second network element may implement clock synchronization via the first network element having best performance in the plurality of network elements, to improve performance of clock synchronization.

Similarly, if the state information includes the local source type information, the second network element may select, from the plurality of network elements and the second network element, a network element whose local source type is the atomic clock. In other words, if the local source type of the first network element in the plurality of network elements is the atomic clock, the second network element selects the first network element to perform clock synchronization. If the local source type of only the second network element in the plurality of network elements and the second network element is the atomic clock, the second network element no longer depends on another network element to perform clock synchronization. In other words, the second network element performs clock synchronization with the second network element.

It should be understood that, in addition to the accuracy information, the state information may include one or more types of information. Therefore, after receiving the state information, the second network element may determine whether to switch the first network element with reference to one or more of the accuracy information and the foregoing information, or whether to use the local source of the second network element, and whether to adjust, based on a feature of a network element selected by the second network element for clock synchronization, a service currently provided by the second network element, and the like. For example, the second network element may determine, based on received state information of one or more different network elements, whether a first network element having better quality exists in the one or more different network elements, namely, a first network element having a stronger holdover capability, a longer holdover duration, a local source type being an atomic clock, and supporting more clock reference source types, and the first network element is selected to perform clock synchronization. Alternatively, if the second network element finds that the local source of the second network element is superior to a local source of the one or more different first network elements, the second network element may select the second network element to perform clock synchronization.

In addition, when the state information includes at least two of the capability information, the holdover duration information, the clock reference source type information, and the local source type information, the second network element may further perform clock synchronization with the first network element or the second network element according to a first rule. The first rule is priorities of different types of information in the state information. In other words, the second network element selects information having a highest priority in the state information according to the first rule, selects the first network element or the second network element based on the information having the highest priority, and performs clock synchronization with the first network element or the second network element. For example, if the state information received by the second network element includes the capability information, the holdover duration information, the clock reference source type information, and the local source type information, and in the state information, according to the first rule, the local source type, the capability information, the holdover duration information, and the clock reference source type information are in descending order of priority, the second network element selects a network element having an optimal local source based on the local source type, and then performs clock synchronization with the selected network element having the optimal local source. In other words, if the local source type of the first network element is the optimal network element, the second network element performs clock synchronization with the first network element. If the local source type of the second network element is the optimal network element, the second network element performs clock synchronization with the second network element.

In summary, that the second network element performs clock synchronization with the first network element should be understood as that the second network element may implement clock synchronization via the first network element. In other words, the second network element may choose to use the first network element to perform clock synchronization. For example, the second network element selects, based on the state information and from one or more of the foregoing plurality of perspectives, for example, the capability information, the holdover duration, the local source type, and the clock reference source type, a network element having a stronger capability and better performance from the second network element and the first network element to perform clock synchronization. That the second network element performs clock synchronization with the second network element should be understood as that the second network element implements clock synchronization depending on the local source of the second network element. That the second network element performs clock synchronization with the second network element should be understood as that the second network element is in the holdover state. Alternatively, that the second network element obtains clock information via the local source of the second network element may be understood as that the second network element does not use the first network element to perform clock synchronization.

Compared with a case in which the second network element performs clock synchronization still according to a policy of the locked state when the second network element cannot detect that the first network element enters the holdover state, and consequently, a clock synchronization error occurs, according to this embodiment shown in this application, the first network element may notify the second network element of the state information, to enable the second network element to adjust clock synchronization based on the state information of the holdover state, this application helps improve the performance of clock synchronization.

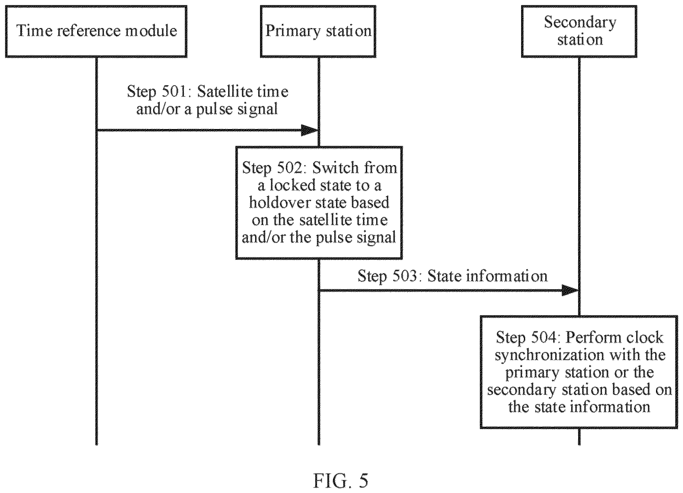

With reference to the method shown in FIG. 4, FIG. 5 is another method for a time domain clock synchronization scenario to which this application is applicable. As shown in FIG. 5, for a primary station in FIG. 5, refer to the descriptions of the first network element in FIG. 4. For a secondary station, refer to the descriptions of the second network element in FIG. 4. The method may include the following steps.

Step 501: The primary station receives satellite time information and/or a pulse signal of a time reference module from the time reference module.

Step 502: The primary station switches from a locked state to a holdover state based on the satellite time information and/or the pulse signal.

For example, the primary station determines, based on the satellite time information and/or the pulse signal, that the time reference module is faulty. In this case, the primary station switches from the locked state to the holdover state.

For example, the pulse signal of the time reference module is a 1 pulse per second (pulse per second, pps) signal of the time reference module, and the 1pps signal of the time reference module may indicate one-second phase information of the time reference module. Specifically, the pulse signal may be generated by a satellite card in the time reference module.

For example, the satellite time information indicates time information of the satellite. Specifically, the time information of the satellite may be converted to UTC time.

Specifically, a local clock module of the primary station generates a local pulse signal of the primary station. The local pulse signal may also be a 1 pulse per second (pulse per second, pps) signal, and the local 1pps signal of the primary station includes phase information of the local clock module of the primary station. In addition, the local clock module may generate local time information. The local time information may indicate local time of the primary station. A comparing module of the primary station may compare the local pulse signal of the primary station with the pulse signal of the time reference module. If a phase difference value between the two pulse signals exceeds a first threshold, the comparing module of the primary station determines that the time reference module is faulty. Alternatively, a comparing module of the primary station may compare the local time information of the primary station with the satellite time information of the satellite. If a difference value between the two pieces of time information exceeds a second threshold, the comparing module determines that the time reference module is faulty. Alternatively, a comparing module of the primary station may compare the local pulse signal of the primary station with the pulse signal of the time reference module, and compare the local time information of the primary station with the satellite time information of the satellite. If a phase difference value between the two pulse signals exceeds a first threshold, and a difference value between the two pieces of time information exceeds a second threshold, the comparing module of the primary station determines that the time reference module is faulty. The first threshold and the second threshold may be determined based on an actual application requirement. This is not limited in this application. In other words, the primary station may determine that the time reference module is faulty based on the time information and/or the pulse signal, so that the primary station switches from the locked state to the holdover state.

Step 503: The primary station sends state information to the secondary station.

Correspondingly, the secondary station receives the state information from the primary station.

For this step, refer to the descriptions of step 402 in FIG. 4.

The state information includes accuracy information. For the accuracy information, refer to the descriptions of the accuracy information in FIG. 4. The accuracy information may be enhanced accuracy metric (ENHANCED ACCURACY METRICS) information, enhanced accuracy clock quality (ENHANCED_ACCURACY_ClockQuality) information, or information of another name. No matter how the name is changed, the state information may be for reflecting a status of a clock synchronization service that the primary station can currently provide. The accuracy information includes real-time phase accuracy peak information of the primary station. For the real-time phase accuracy peak information of the primary station, refer to the descriptions of the real-time phase accuracy peak information of the first network element in FIG. 4. A real-time phase accuracy peak value of the primary station may also be referred to as real-time accuracy peak information of the primary station (maxGmInAccuracy) or a time interval (Time Interval).

The state information further includes at least one of the following: holdover capability information, holdover duration information, clock reference source type information, and a local source type. For details about the state information, refer to the descriptions in FIG. 4. Details are not described herein again.

For example, before this step, the secondary station sends a request message to the primary station. The request message carries a management value field, and the field may be managementTLV. The request message is for requesting the primary station to notify the secondary station of management information. The management information may be information about the primary station, for example, the state information and the accuracy information. Therefore, the primary station can notify the secondary station of the state information.

It should be understood that a message for sending the state information is not limited in this application, and a name of the message may be adaptively modified based on different usage scenarios.

It should be understood that the state information may be sent by using a plurality of messages, or may be sent by using one message. This is not limited in this application.

Step 504: The secondary station performs clock synchronization with the primary station or the secondary station based on the accuracy information.

For this step, refer to the descriptions of step 403 in FIG. 4.

For example, the secondary station may adjust a clock synchronization behavior based on the state information for a service.

For beneficial effects of the method shown in FIG. 5, refer to the descriptions in FIG. 4. Details are not described herein again.

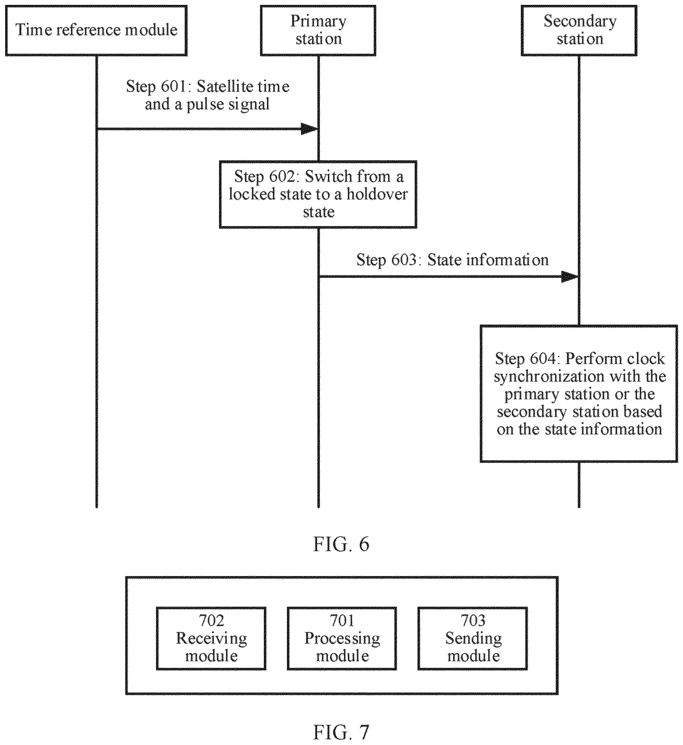

With reference to the method shown in FIG. 4, FIG. 6 is still another method for a time domain clock synchronization scenario to which this application is applicable. As shown in FIG. 6, for a primary station in FIG. 6, refer to the descriptions of the first network element in FIG. 4. For the secondary station, refer to the descriptions of the second network element in FIG. 4. The method in this embodiment shown in this figure is applicable to a frequency domain clock synchronization scenario. The method may include the following steps.

Step 601: The primary station receives satellite time information and/or a pulse signal of a time reference module from the time reference module.

Step 602: The primary station switches from a locked state to a holdover state.

For step 601 and step 602, refer to the descriptions of step 501 and step 502 in the foregoing embodiment.

Step 603: The primary station sends state information to the secondary station.

Correspondingly, the secondary station receives the state information from the primary station.

For this step, refer to the descriptions of step 402 in FIG. 4.

The state information includes accuracy information, and the accuracy information includes frequency accuracy information. The frequency accuracy information indicates a frequency deviation ratio of the primary station in the holdover state. In other words, the frequency accuracy information may indicate a deviation ratio between a time frequency value generated by the primary station by using a time reference module and a standard frequency value of satellite time. Specifically, the frequency accuracy information may be in a unit of parts per million (PPM). The deviation ratio may be for representing accuracy of clock information provided by the primary station for the secondary station. For the frequency accuracy information, refer to the descriptions of the frequency accuracy information in FIG. 4.

In a possible implementation, the state information may include one or more of holdover capability information, holdover duration information, clock reference source type information, and a local source type. For the holdover capability information, the holdover duration information, the clock reference source type information, and the local source type information, refer to the descriptions in FIG. 4. Details are not described herein again.

Step 604: The secondary station performs clock synchronization with the primary station or the secondary station based on the accuracy information.

For example, if the state information includes the frequency accuracy information, the secondary station may choose whether to continue to use the primary station to perform clock synchronization. If the secondary station determines, based on the frequency accuracy information, that accuracy of clock synchronization of the current primary station cannot meet a service requirement of the secondary station, the secondary station may stop using the primary station to perform clock synchronization, and the secondary station may choose to use a local source of the secondary station to perform clock synchronization. It should be understood that, if the secondary station is an access network device that supports frequency synchronization, for example, an access network of a frequency division duplex (Frequency Division Duplex, FDD) standard or an access network of a wideband code division multiple access (Wideband Code Division Multiple Access, WCDMA) standard, in a scenario of frequency synchronization, or when the secondary station provides an enhanced bandwidth carrier aggregation service or even some other services that have special requirements on synchronization accuracy of the primary station, the frequency accuracy information can provide a better clock synchronization service. Compared with a case in which, if obtaining, based on the state information, that the primary station is currently in the holdover state, the secondary station stops tracking the primary station, in other words, stops clock synchronization, and consequently, the service cannot be provided for the user, if the secondary station may dynamically adjust the service and adjust service time of the secondary station based on the frequency accuracy information after obtaining the state information, instead of stopping providing the service for the user, this method can further improve user experience.

For this step, refer to the descriptions of step 403 in FIG. 4. Details are not described herein again.

The method shown in this embodiment can improve performance of clock synchronization in the frequency domain clock synchronization scenario, and can further improve service performance of the secondary station, and even prolong service duration of the secondary station. For beneficial effects of the method shown in this embodiment, refer to the descriptions in FIG. 5. Details are not described herein again.

Correspondingly, an embodiment of this application further provides a communication apparatus. The communication apparatus may be the first network element or the primary station, or the second network element or the secondary station in the foregoing method embodiments, an apparatus including a function of the first network element or the primary station, or the second network element or the secondary station, or may be a component having a function similar to that of the first network element or the primary station, or the second network element or the secondary station. It may be understood that, to implement the foregoing function, the communication apparatus includes a hardware structure and/or a software module for performing a corresponding function. A person skilled in the art should be easily aware that, in combination with the units and the algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions of each particular application, but it should not be considered that the implementation goes beyond the scope of this application.

FIG. 7 is a schematic diagram of a communication apparatus according to an embodiment of this application.

The communication apparatus includes a processing module 701, a receiving module 702, and a sending module 703. The processing module 701 is used by the communication apparatus to process data. The receiving module 702 is configured to receive content between the communication apparatus and another unit or network element. The sending module 703 is configured to send content between the communication apparatus and another unit or network element. It should be understood that the processing module 701 in this embodiment of this application may be implemented by a processor or a processor-related circuit component (or referred to as a processing circuit). The receiving module 702 may be implemented by a receiver or a receiver-related circuit component. The sending module 703 may be implemented by a transmitter or a transmitter-related circuit component.

For example, the communication apparatus may be a communication apparatus device, a chip used in a communication apparatus device, or another combined device or component that has a function of the communication apparatus device.

For example, the communication apparatus may be the first network element or the primary station in any one of FIG. 4 to FIG. 6, or may be the second network element or the secondary station in any one of FIG. 4 to FIG. 6.

When the communication apparatus is the first network element or the primary station, the processing module 701 is configured to switch from a locked state to a holdover state (for example, step 401 in FIG. 4, step 502 in FIG. 5, and step 602 in FIG. 6). The sending module 703 is configured to send state information to the second network element. The state information includes accuracy information of the first network element in the holdover state (for example, step 402 in FIG. 4, step 503 in FIG. 5, and step 603 in FIG. 6).

In addition, each module may be further configured to support another process of the technical solutions related to the first network element or the primary station in FIG. 4 to FIG. 6 in this specification. For beneficial effects, refer to the foregoing descriptions. Details are not described herein again.

When the communication apparatus is the second network element or the secondary station, the receiving module 702 is configured to receive state information from the first network element. The state information includes accuracy information of the first network element in the holdover state (for example, step 402 in FIG. 4, step 503 in FIG. 5, and step 603 in FIG. 6). The processing module 701 is configured to perform clock synchronization with the first network element or the second network element based on the accuracy information (for example, step 403 in FIG. 4, step 504 in FIG. 5, and step 604 in FIG. 6).

In addition, each module may be further configured to support another process of the technical solutions related to the second network element or the secondary station in FIG. 4 to FIG. 6 in this specification. For beneficial effects, refer to the foregoing descriptions. Details are not described herein again.

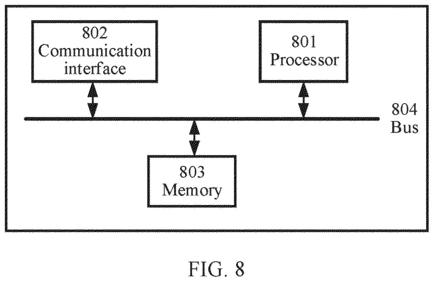

FIG. 8 is a schematic diagram of another communication apparatus according to an embodiment of this application. The communication apparatus includes a processor 801, a communication interface 802, and a memory 803. The processor 801, the communication interface 802, and the memory 803 may be connected to each other via a bus 804. The bus 804 may be a peripheral component interconnect (peripheral component interconnect, PCI) bus, an extended industry standard architecture (extended industry standard architecture, EISA) bus, or the like. The bus 804 may be classified into an address bus, a data bus, a control bus, and the like. For ease of representation, the bus is represented by using only one line in FIG. 8, but it does not indicate that there is only one bus or one type of bus. The processor 801 may be a central processing unit (central processing unit, CPU), a network processor (network processor, NP), or a combination of a CPU and an NP. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (Generic Array Logic, GAL), or any combination thereof. The memory 803 may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache.

For example, the communication apparatus may be the first network element or the primary station in any one of FIG. 4 to FIG. 6, or may be the second network element or the secondary station in any one of FIG. 4 to FIG. 6.

The processor 801 is configured to implement a data processing operation of the communication apparatus. The communication interface 802 is configured to implement a receiving operation and a sending operation of the communication apparatus.

When the communication apparatus is the first network element or the primary station, the communication interface 802 is configured to send state information to the second network element. The state information includes accuracy information of the first network element in a holdover state (for example, step 402 in FIG. 4, step 503 in FIG. 5, and step 603 in FIG. 6). The processor 801 is configured to switch from a locked state to the holdover state (for example, step 401 in FIG. 4, step 502 in FIG. 5, and step 602 in FIG. 6). In addition, each module may be further configured to support another process of the technical solutions related to the first network element or the primary station in FIG. 4 to FIG. 6 in this specification. For beneficial effects, refer to the foregoing descriptions. Details are not described herein again.

When the communication apparatus is the second network element or the secondary station, the communication interface 802 is configured to receive state information from the first network element. The state information includes accuracy information of the first network element in a holdover state (for example, step 402 in FIG. 4, step 503 in FIG. 5, and step 603 in FIG. 6). The processor 801 is configured to perform clock synchronization with the first network element or the second network element based on the accuracy information (for example, step 403 in FIG. 4, step 504 in FIG. 5, and step 604 in FIG. 6). In addition, each module may be further configured to support another process of the technical solutions related to the second network element or the secondary station in FIG. 4 to FIG. 6 in this specification. For beneficial effects, refer to the foregoing descriptions. Details are not described herein again.

An embodiment of this application provides a communication system. The communication system includes the foregoing first network element and second network element, or includes the foregoing primary station and secondary station. The first network element or the primary station performs the method performed by the first network element or the primary station in any one of embodiments shown in FIG. 4 to FIG. 6. The second network element or the secondary station performs the method performed by the second network element or the secondary station in any one of embodiments shown in FIG. 4 to FIG. 6.

An embodiment of this application further provides a computer-readable storage medium. The computer-readable storage medium stores a computer program. When the computer program is executed by a computer, the computer may implement technical solutions related to the first network element or the primary station, or the second network element or the secondary station in any one of embodiments shown in FIG. 4 to FIG. 6 in the foregoing method embodiments, or the computer may implement the technical solutions related to the first network element or the primary station, or the second network element or the secondary station in any one of embodiments shown in FIG. 4 to FIG. 6 in the foregoing method embodiments.

An embodiment of this application further provides a computer program product. The computer program product is configured to store a computer program. When the computer program is executed by a computer, the computer may implement a procedure related to the first network element or the primary station, or the second network element or the secondary station in any one of embodiments shown in FIG. 4 to FIG. 6 in the foregoing method embodiments, or the computer may implement the technical solutions related to the first network element or the primary station, or the second network element or the secondary station in any one of embodiments shown in FIG. 4 to FIG. 6 in the foregoing method embodiments.

This application further provides a chip, including a processor. The processor is configured to read a computer program stored in a memory and run the computer program, to perform a corresponding operation and/or procedure of the first network element or the primary station, or the second network element or the secondary station in the methods provided in this application. Optionally, the chip further includes a memory. The memory and the processor are connected to the memory via a circuit or a wire, and the processor is configured to read a computer program in the memory and execute the computer program. Optionally, the memory may alternatively be a storage device independent of the chip. Optionally, the chip further includes a communication interface, and the processor is connected to the communication interface. The communication interface is configured to receive processed data and/or information. The processor obtains the data and/or information from the communication interface, and processes the data and/or information. The communication interface may be an input/output interface, an interface circuit, an output circuit, an input circuit, a pin, a related circuit, or the like on the chip. The processor may alternatively be embodied as a processing circuit or a logic circuit.

The chip may alternatively be replaced with a chip system. Details are not described herein again.

In this application, the terms "include", "have", and any other variants mean to cover the non-exclusive inclusion, for example, a process, method, system, product, or device that includes a list of steps or units is not necessarily limited to those steps or units, but may include other steps or units not expressly listed or inherent to such a process, method, system, product, or device.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions of each particular application, but it should not be considered that the implementation goes beyond the scope of this application.

It may be clearly understood by a person skilled in the art that, for convenient and brief description, for a detailed working process of the foregoing system, apparatus, and units, refer to a corresponding process in the foregoing method embodiments, and details are not described herein again.

In the several embodiments provided in this application, it should be understood that the disclosed systems, apparatuses, and methods may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electronic form, a mechanical form, or another form.

The units described as separate parts may or may not be physically separate, and parts displayed as units may or may not be physical units, may be located at one location, or may be distributed on a plurality of network units. Some or all of the units may be selected based on actual conditions to achieve the objectives of the solutions in this embodiment.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes: any medium that can store program code, a USB flash drive, a removable hard disk, a read-only memory (read-only memory, ROM), a random access memory (random access memory, RAM), a magnetic disk, an optical disc, and the like.

In addition, the terms "first", "second", and the like in this specification, claims, and accompanying drawings of this application are intended to distinguish between different objects, but are not intended to describe a specific order. In addition, terms such as "including" and "having" and any other variants thereof are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

Although this application has been described with reference to specific features and embodiments thereof, it is obvious that various modifications and combinations may be made to this application without departing from the spirit and scope of this application. Correspondingly, the specification and the accompanying drawings are merely example descriptions of this application defined in the appended claims, and are considered as any of or all modifications, variations, combinations or equivalents that cover the scope of this application. Obviously, a person skilled in the art can make various modifications and variations to this application without departing from the spirit and scope of this application. In this way, this application is intended to cover these modifications and variations of this application provided that they fall within the scope of protection defined in the following claims and their equivalent technologies.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for sending accuracy information, wherein the method comprises:
switching, by a first network element, from a locked state to a holdover state; and
sending, by the first network element, state information to a second network element, wherein the state information comprises accuracy information of the first network element in the holdover state.

2. The method according to claim 1, wherein the accuracy information comprises real-time phase accuracy peak information of the first network element, and the real-time phase accuracy peak information of the first network element indicates maximum real-time phase accuracy of the first network element in the holdover state.

3. The method according to claim 1, wherein the accuracy information comprises frequency accuracy information, and the frequency accuracy information indicates a frequency deviation ratio of the first network element in the holdover state.

4. The method according to any one of claims 1 to 3, wherein the state information further comprises holdover capability information of the first network element.

5. The method according to claim 4, wherein the holdover capability information comprises real-time accuracy or step accuracy.

6. The method according to claim 4, wherein the holdover capability information comprises duration in which the first network element works within a first error range.

7. The method according to any one of claims 1 to 6, wherein the state information further comprises holdover duration information of the first network element, the holdover duration information indicates duration in which the first network element works within a second error range, and the second error range is related to a service.

8. The method according to any one of claims 1 to 7, wherein the state information further comprises clock reference source type information, and the clock reference source type information comprises a parameter of a clock reference source adapted to the first network element.

9. The method according to claim 8, wherein the clock reference source type information comprises one or more of the following: a mode of a satellite receiver adapted to the first network element, or a frequency band of a satellite receiver adapted to the first network element.

10. The method according to any one of claims 1 to 9, wherein the state information further comprises local source type information, and the local source type information indicates a type of a local oscillator of the first network element.

11. A method for sending accuracy information, wherein the method comprises:
receiving, by a second network element, state information from a first network element, wherein the state information comprises accuracy information of the first network element in a holdover state; and
performing, by the second network element, clock synchronization with the first network element or the second network element based on the accuracy information.

12. The method according to claim 11, wherein the accuracy information comprises real-time phase accuracy peak information of the first network element, and the real-time phase accuracy peak information of the first network element indicates maximum real-time phase accuracy of the first network element in the holdover state.

13. The method according to claim 12, further comprising:
stopping, by the second network element, using first information, wherein the first information is accuracy information of the first network element in a locked state.

14. The method according to claim 11, wherein the accuracy information comprises frequency accuracy information, and the frequency accuracy information indicates a frequency deviation ratio of the first network element in the holdover state.

15. The method according to claim 14, further comprising:
adjusting, by the second network element, a clock based on the frequency accuracy information.

16. The method according to any one of claims 11 to 15, wherein the state information further comprises holdover capability information of the first network element; and
the performing, by the second network element, clock synchronization with the first network element or the second network element based on the accuracy information comprises:
performing, by the second network element, clock synchronization with the first network element or the second network element based on the holdover capability information and the accuracy information.

17. The method according to claim 16, wherein the holdover capability information comprises a real-time phase accuracy value or a step accuracy value of the first network element.

18. The method according to claim 16, wherein the holdover capability information comprises duration in which the first network element works within a first error range.

19. The method according to any one of claims 11 to 18, wherein the state information further comprises holdover duration information of the first network element, the holdover duration information indicates duration in which the first network element works within a second error range, and the second error range is related to a service; and
the performing, by the second network element, clock synchronization with the first network element or the second network element based on the accuracy information comprises:
performing, by the second network element, clock synchronization with the first network element or the second network element based on the holdover duration information and the accuracy information.

20. The method according to any one of claims 11 to 19, wherein the state information further comprises clock reference source type information, and the clock reference source type information comprises a parameter of a clock reference source adapted to the first network element; and
the performing, by the second network element, clock synchronization with the first network element or the second network element based on the accuracy information comprises:
performing, by the second network element, clock synchronization with the first network element or the second network element based on the clock reference source type information and the accuracy information.

21. The method according to claim 20, wherein the clock reference source type information comprises one or more of the following: a mode of a satellite receiver adapted to the first network element, or a frequency band of a satellite receiver adapted to the first network element.

22. The method according to any one of claims 11 to 21, wherein the state information further comprises local source type information, and the local source type information indicates a type of a local oscillator of the first network element; and
the performing, by the second network element, clock synchronization with the first network element or the second network element based on the accuracy information comprises:
performing, by the second network element, clock synchronization with the first network element or the second network element based on the local source type information and the accuracy information.

23. A communication apparatus, comprising a processor, wherein
the processor is configured to read a program from a memory and run the program, to implement the method according to any one of claims 1 to 10 or the method according to any one of claims 11 to 22.

24. A communication system, comprising a first network element and a second network element, wherein the first network element performs the method according to any one of claims 1 to 10, and the second network element performs the method according to any one of claims 11 to 22.

25. A computer-readable storage medium, wherein the computer-readable storage medium stores instructions; and when the instructions are run on a computer, a processor is enabled to perform the method according to any one of claims 1 to 10 or the method according to any one of claims 11 to 22.

26. A computer program product comprising instructions, wherein when the instructions are run on a computer, the computer is enabled to perform the method according to any one of claims 1 to 10 or the method according to any one of claims 11 to 22.

27. A communication apparatus, wherein the communication apparatus is configured to perform the method according to any one of claims 1 to 10 or the method according to any one of claims 11 to 22.

28. A chip, wherein the chip comprises a processor and an interface circuit, the interface circuit is coupled to the processor, and the processor is configured to run a computer program or instructions, to enable the method according to any one of claims 1 to 10 or the method according to any one of claims 11 to 22 to be performed.
